(19) Europäisches Patentamt
European Patent Office
Office européen des brevets

(11) **EP 2 767 809 A1**

(12) **EUROPEAN PATENT APPLICATION**
published in accordance with Art. 153(4) EPC

(43) Date of publication:
**20.08.2014 Bulletin 2014/34**

(51) Int Cl.:
*G01J 1/02* (2006.01)

(21) Application number: **11874105.7**

(22) Date of filing: **11.10.2011**

(86) International application number:
**PCT/JP2011/005683**

(87) International publication number:
**WO 2013/054372 (18.04.2013 Gazette 2013/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Mitsubishi Electric Corporation Tokyo 100-8310 (JP)**

(72) Inventors:
- **SHODA, Fumio**
  **Tokyo 100-8310 (JP)**
- **FUKAHORI, Hidenori**
  **Tokyo 100-8310 (JP)**
- **YANAGISAWA, Takayuki**
  **Tokyo 100-8310 (JP)**
- **YABE, Mitoru**
  **Tokyo 100-8310 (JP)**
- **NISHIMURA, Tetsuya**
  **Tokyo 100-8310 (JP)**
- **YAMAMOTO, Shuhei**
  **Tokyo 100-8310 (JP)**
- **INOUE, Yoko**
  **Tokyo 100-8310 (JP)**
- **FUNAKURA, Tetsuo**
  **Tokyo 100-8310 (JP)**

(74) Representative: **Pfenning, Meinig & Partner GbR Patent- und Rechtsanwälte Theresienhöhe 13 80339 München (DE)**

(54) **LASER OUTPUT MEASUREMENT MECHANISM**

(57) A laser output measurement mechanism includes a light splitter 2 that is disposed in a state rotated by a predetermined angle about an optical axis 6 of laser light incident thereon, and that reflects a part of the laser light according to a Fresnel reflectivity that depends on a polarization direction and an incident angle of the laser light at a reflection surface thereof, and a light detector 4 that measures an intensity of the laser light reflected by the light splitter 2.

FIG.1

EP 2 767 809 A1

**Description**

TECHNICAL FIELD

The present invention relates to a laser output measurement mechanism to be used for performing output control of laser light.

BACKGROUND ART

In the past, in order to adjust the output of the laser light from a laser oscillator, a laser output measurement mechanism that measures the intensity of the laser light has been used (for example, see Patent Document 1). For example, as shown in Fig. 12, the conventional laser output measurement mechanism is configured with a light splitter 102 that reflects a part of the laser light emitted from a laser oscillator 101 as monitor light, and a light detector 103 that detects the intensity of the reflected light from the light splitter 102. Then, the intensity measured by the light detector 103 is fed back to the laser oscillator 101, and output control of the laser light is performed. On the other hand, the laser light transmitted through the light splitter 102 is used for a normal purpose of the laser light.

In this case, the light splitter 102 is disposed in a state inclined by a predetermined angle (usually, 45 degrees) to an optical axis 104 of the laser light emitted from the laser oscillator 101. Further, a reflection surface of the light splitter 102 is usually provided with a partially reflective coating of a dielectric multilayer film on a reflection surface of the light splitter 102 in order to have an intended reflectivity.

PRIOR ART DOCUMENTS

PATENT DOCUMENTS

Patent Document 1: Japanese Patent Application Laid-open No.H04-220535

SUMMARY OF THE INVENTION

PROBLEMS TO BE SOLVED BY THE INVENTION

As mentioned above, in the conventional laser output measurement mechanism, in order for the reflection surface of the light splitter 102 to have an intended reflectivity, the partially reflective coating of the dielectric multilayer film is provided thereon. Since the partially reflective coating is directed to a reflection for a monitoring use, it is usually provided as a coating in a low region in reflectivity.

Meanwhile, the reflectivity of a dielectric film varies due to temperature or absorption of atmospheric moisture. Thus, for example, when a light splitter 102 of 1% in reflectivity (99% in transmission) is used, a change of 0.1% in reflectivity results in (0.1%/1.0%) = 10% in the output change of the reflected laser light. Therefore, an occurrence of deterioration in the coating film has a great effect thereon irrespective of a slight variation in the reflectivity, which poses a problem to make difficult an accurate output measurement of the laser light.

Further, it is difficult to control a dielectric film having a low reflectivity; there occurs a large variation thereof, and also a cost for film formation thereof is required, which poses a problem to make expensive the laser output measurement mechanism.

The present invention has been made to solve the foregoing problems, and an object of the invention is to provide a laser output measurement mechanism capable of performing accurately an output measurement of the laser light at low cost without applying the partially reflective coating to the light splitter.

MEANS FOR SOLVING THE PROBLEMS

A laser output measurement mechanism according to the present invention includes: a light splitter that is disposed in a state rotated by a predetermined angle about an optical axis of laser light incident thereon, and that reflects a part of the laser light according to a Fresnel reflectivity that depends on a polarization direction and an incident angle of the laser light at a reflection surface thereof; and a light detector that measures an intensity of the laser light reflected by the light splitter.

In addition, a laser output measurement mechanism according to the invention includes: a light splitter that is disposed in a state rotated by a predetermined angle about a line as an axis perpendicular to an optical axis of laser light incident thereon and existing on a reflection surface thereof, and that reflects a part of the laser light according to a Fresnel reflectivity that depends on a polarization direction and an incident angle of the laser light at the reflection surface; and a light detector that measures an intensity of the laser light Fresnel-reflected by the light splitter.

EFFECT OF THE INVENTION

According to the present invention, since it is configured as described above, an output measurement of the laser light can be performed accurately without applying a partially reflective coating to the light splitter. Further, since an expensive coating is not required, cost reduction thereof can be achieved.

BRIEF DESCRIPTION OF THE DRAWINGS

Fig. 1 is a side view showing a configuration of a laser output measurement mechanism according to Embodiment 1 of the present invention.
Fig. 2 is a side view showing a light splitter equipped with an angle adjusting mechanism in Embodiment 1 of the invention.
Fig. 3 is a schematic perspective view showing the light splitter equipped with the angle adjusting mechanism in Embodiment 1 of the invention.
Fig. 4 is a front view showing the light splitter equipped with the angle adjusting mechanism in Embodiment 1 of the invention.
Fig. 5 is a graph showing a relationship between a rotation angle and a reflectivity of the light splitter in Embodiment 1 of the invention.
Fig. 6 is a flowchart showing an operation of the laser output measurement mechanism according to Embodiment 1 of the invention.
Fig. 7 is a side view showing a configuration of a laser output measurement mechanism according to Embodiment 2 of the invention.
Fig. 8 is a side view showing a light splitter equipped with an angle adjusting mechanism in Embodiment 2 of the invention.
Fig. 9 is a schematic perspective view showing the light splitter equipped with the angle adjusting mechanism in Embodiment 2 of the invention.
Fig. 10 is a graph showing a relationship between an incident angle of laser light on the light splitter and a reflectivity thereof, in Embodiment 2 of the invention.
Fig. 11 is a side view showing a configuration of a laser output measurement mechanism according to Embodiment 3 of the invention.
Fig. 12 is a side view showing a configuration of a conventional laser output measurement mechanism.

BEST MODE FOR CARRYING OUT THE INVENTION

Hereinafter, embodiments of the present invention will be described in detail with reference to the drawings.

Embodiment 1.

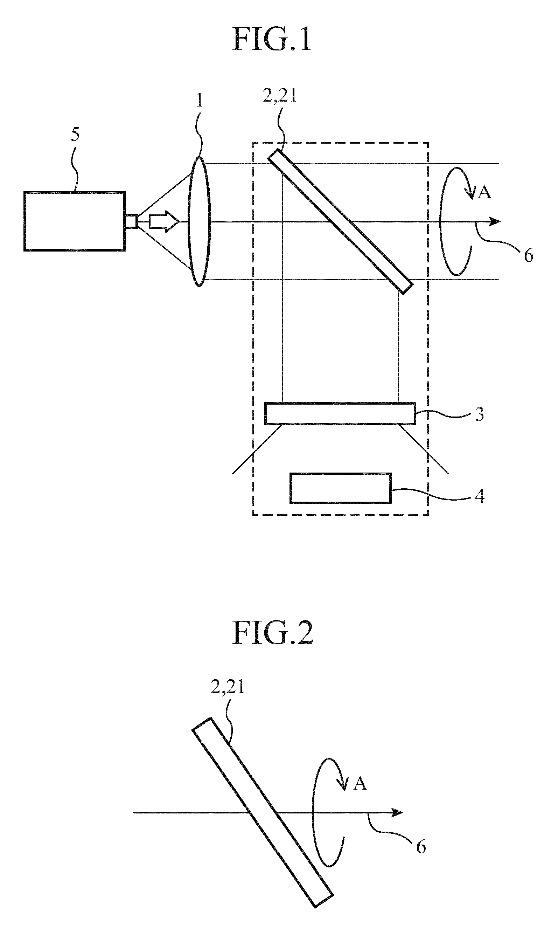

Fig. 1 is a side view showing a configuration of a laser output measurement mechanism according to Embodiment 1 of the invention.
As shown in Fig. 1, the laser output measurement mechanism is configured with a lens 1, a light splitter 2, a diffusion plate 3, and a light detector 4.
The lens 1 is disposed on an optical axis 6 of laser light emitted from a laser oscillator 5, and collimates the laser light into parallel light.
The light splitter 2 is disposed in a rear stage of the lens 1 and serves to reflect a part of the laser light collimated by the lens 1 as monitor light. A partial reflection coating is not applied on a reflection surface of the light splitter 2. Instead, as shown in Figs. 1 to 3, the light splitter 2 is equipped with an angle adjusting mechanism 21 for rotating the light splitter 2 by a predetermined angle about the optical axis 6 (in an arrow A direction). Then, when the angle of the light splitter 2 is adjusted by the angle adjusting mechanism 21, a polarization direction of the laser light incident on the reflection surface of the light splitter 2 is adjusted, and a Fresnel reflectivity that depends on the polarization direction and the incident angle of the laser light is adjusted.
The diffusion plate 3 is disposed on a path of the laser light reflected by the light splitter 2, and serves to diffuse the laser light and make it incident on the light detector 4.
The light detector 4 is disposed in a rear stage of the diffusion plate 3, and serves to measure an intensity of the laser light that is diffused by the diffusion plate 3 and incident thereon.

Note that the light splitter 2, diffusion plate 3, and light detector 4 surrounded by a broken line in Fig. 1 are integrally configured with each other. For this reason, when the light splitter 2 is rotated by the angle adjusting mechanism 21, the diffusion plate 3 and light detector 4 also are rotated integrally therewith.

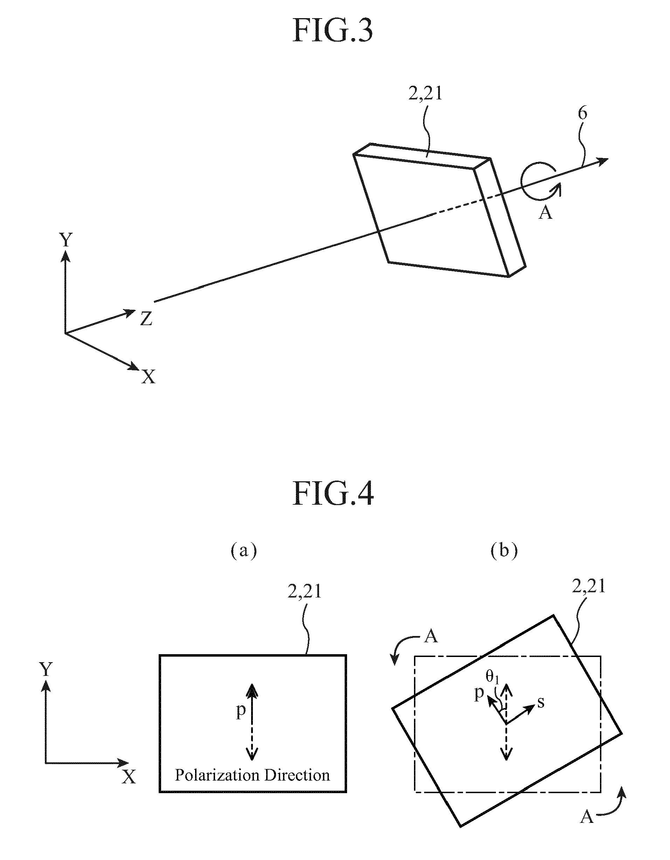

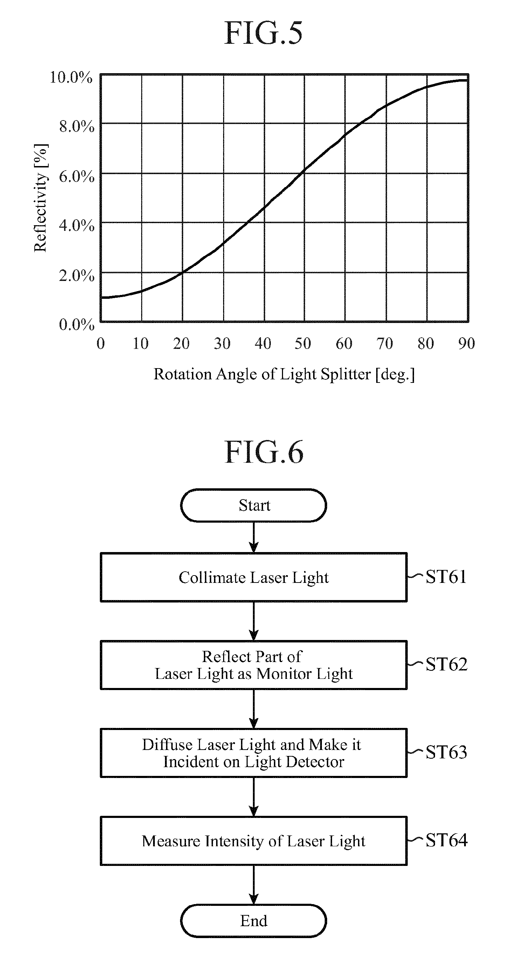

Next, a principle of how the reflectivity in the light splitter 2 is adjusted by the angle adjusting mechanism 21 will be described with reference to Figs. 4 and 5. Note that in Fig. 4 a rotation angle of the light splitter 2 by the angle adjusting mechanism 21 about the optical axis 6 (in the arrow A direction) is represented as "$\theta_1$".

Here, as shown in Fig. 4(a), the laser light incident on the light splitter 2 is assumed to have only a p-polarization component when the angle $\theta_1 = 0°$. Then, when the light splitter 2 is rotated in the arrow A direction as shown in Fig. 4(b), an s-polarization component emerges, whereas the p-polarization component decreases. Thereafter, when the angle $\theta_1 = 90°$, the p-polarization component vanishes, and only the s-polarization component remains.

As describe above, when the light splitter 2 is rotated in the arrow A-direction by the angle adjusting mechanism 21, a ratio between the vertical polarization wave (P-wave) and the horizontal polarization wave (S-wave) of the laser light incident on the light splitter 2 can be adjusted.

On the other hand, since the partially reflective coating is not applied to the light splitter 2, a Fresnel reflection occurs at the reflection surface. Thus, it is assumed that reflectivities $R_p$, $R_s$ depending on a refractive index of a material of the reflection surface are respectively provided for the P-wave and S-wave in the incident laser light. Here, when the refractive index of the material of the reflection surface in the light splitter 2 is represented as "n", and the incident angle of the laser light on the light splitter 2 is represented as "$\theta_0$", the reflectivities $R_p$, $R_s$ of the light at the boundary between the air and the light splitter 2 are expressed by the following formulae (1) and (2).

- Reflectivity $R_p$ for the P-wave

$$R_p = [\tan\{\theta_0 - \sin^{-1}(\tfrac{1}{n}\sin\theta_0)\}/\tan\{\theta_0 + \sin^{-1}(\tfrac{1}{n}\sin\theta_0)\}]^2 \qquad (1)$$

- Reflectivity $R_s$ for the S-wave

$$R_s = [\sin\{\theta_0 - \sin^{-1}(\tfrac{1}{n}\sin\theta_0)\}/\sin\{\theta_0 + \sin^{-1}(\tfrac{1}{n}\sin\theta_0)\}]^2 \qquad (2)$$

From the formulae (1) and (2), it can be seen that the reflectivities $R_p$, $R_s$ at the light splitter 2 are determined by the refractive index n of the material of the reflection surface in the light splitter 2, and the incident angle $\theta_0$ of the laser light on the light splitter 2.

Thus, the reflectivity at the whole light splitter 2 is determined according to a ratio of the P-wave and S-wave in the incident laser light. Here, when the rotation angle of the light splitter 2 about the optical axis 6 is represented as "$\theta_1$", a ratio of a P-wave component to an S-wave component in the laser light is expressed as $\cos^2\theta_1 : \sin^2\theta_1$; thus, it is found that the ratio depends on the rotation angle $\theta_1$ of the light splitter 2.

Accordingly, the reflectivity of the light splitter 2 as a whole is expressed by the following formula (3).

$$\text{(Rate of P-wave component)} \times \text{(Reflectivity } R_p \text{ for P-wave)} + \text{(Rate of S-wave component)} \times \text{(Reflectivity } R_s \text{ for S-wave)}$$

$$= R_p\cos^2\theta_1 + R_s\sin^2\theta_1 \qquad (3)$$

From the above, when the ratio of the P-wave and S-wave in the laser light is changed by adjusting the rotation angle $\theta_1$ of the light splitter 2 about the optical axis 6 in the range from 0° to 90°, it becomes possible to adjust the reflectivity at the reflection surface of the light splitter 2 within the range from $R_p$ to $R_s$.

Here, if the laser light is, for example, linear-polarized light, and is polarized within a plane including a normal at the reflection surface of the light splitter 2 and the optical axis 6 (in the case of the P-wave), a rate of a reflection component by the light splitter 2 becomes smaller. Then, for example, when a glass (BK: refractive index n = 1.52) is employed as the reflection surface of the light splitter 2, and the incident angle $\theta_0$ of the laser light on the light splitter 2 is set to 45°, the reflectivity is $R_p \times 100 = 0.9\%$ from the above formulae (1) and (3).

In contrast, if the laser light is polarized perpendicular to the plane including the normal at the reflection surface of the light splitter 2 and the optical axis 6 (in the case of the S-wave), the reflectivity is higher than that of the case of the P-wave, which results in $R_s \times 100 = 9.7\%$ from the above formulae (2) and (3).

Therefore, in the above example, when the ratio of the P-wave and S-wave incident on the light splitter 2 is adjusted, it becomes possible to adjust the reflectivity of the light splitter 2 within the range from 0.9% to 9.7%.

In Fig. 5, there is shown a dependence relationship between the rotation angle of the light splitter 2 about the optical axis 6 and the reflectivity of the light splitter 2, when the incident angle $\theta_0$ of the laser light on the light splitter 2 is set to 45°. From Fig. 5, it can be seen that when it is wished to obtain a reflectivity of 2.0%, for instance, the rotation angle of the light splitter 2 about the optical axis 6 may be set to 20°.

Next, an operation of the laser output measurement mechanism configured as mentioned above will be described with reference to Fig. 6.

In the operation of the laser output measurement mechanism, firstly, as shown in Fig. 6, the lens 1 collimates the laser light emitted from the laser oscillator 5 into the parallel light (Step ST61). In this step, the lens 1 is disposed in a front stage of the light splitter 2 to convert the laser light into the parallel light, and hence the laser light can be made incident efficiently on spots of the light splitter 2, diffusion plate 3, and light detector 4 in the rear stage thereof.

Then, in a state where the light splitter 2 is rotated by a predetermined angle about the optical axis 6 by the angle adjusting mechanism 21, it reflects a part of the laser light collimated by the lens 1 as monitor light (Step ST62). In this step, it is necessary that the P-wave and S-wave of the laser light incident on the light splitter 2 be made incident thereon at a constant rate without temporal variations, and it is thus desirable to use nearly linearly polarized laser light. However, the laser light is applicable to the invention since the P-wave and S-wave thereof are incident on the light splitter 2 at a certain ratio except completely non-polarized light thereof.

Next, the diffusion plate 3 diffuses the laser light reflected by the light splitter 2, and makes it incident on the light detector 4 (Step ST63). Thereafter, the light detector 4 measures an intensity of the laser light that is diffused by the diffusion plate 3 to be incident thereon (Step ST64). The intensity measured by the light detector 4 is fed back to the laser oscillator 5, and the output of the laser light is adjusted by the laser oscillator 5. On the other hand, the laser light transmitted through the light splitter 2 is used for a proper purpose of the laser light.

In this case, when the diffusion plate 3 is disposed on a path of the laser light reflected by the light splitter 2, the laser light can be diffused uniformly. Further, when the light detector 4 is disposed in the rear stage of the diffusion plate 3, even when the light path of the reflected light is changed in adjustment of the angle of the light splitter 2, or a spatial energy distribution of the laser light is non-uniform, a certain proportion of the light can be made incident accurately on the light detector 4 without changing the position of the light detector 4. Thus, it becomes possible to measure accurately an intensity of the laser light. Incidentally, since the laser light is diffused by the diffusion plate 3, there is no limit for an opening area of the light detector 4; however, for an accurate power measurement thereof, it is desirable that an opening area of the light detector 4 be smaller than a diffusion area of the diffused laser light. Thus, even if a slight variation occurs in an optical path of the laser light, a measurement of an accurate output level thereof becomes possible without being affected by the variation.

In addition, in the laser output measurement mechanism of the present invention, the light splitter 2, diffusion plate 3, and light detector 4 are configured integrally with each other; this configuration is to avoid a situation in which the reflected light is not incident on the diffusion plate 3 and light detector 4 any longer when the optical path of the reflected light is changed with the angle adjustment of the light splitter 2. That is, when the light splitter 2, diffusion plate 3, and light detector 4 are moved integrally, the reflected light can be surely made incident on the diffusion plate 3 and light detector 4 without being affected by a displacement of the optical path with the angle adjustment of the light splitter 2.

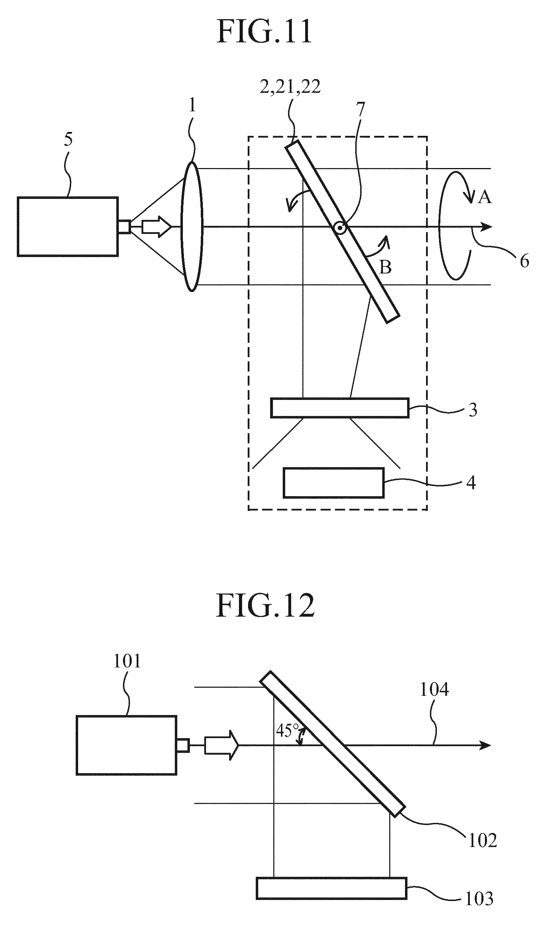

Meanwhile, when the intensity of the laser light is measured with a part of the laser light separated, in order to prevent the power of the laser light to be originally output from being reduced as much as possible, a lower reflectivity thereof is desirable. On the other hand, if the reflectivity is too low, the laser light is not incident on the light detector 4 sufficiently, which cause an error due to noise such as stray light. Thus, it is desirable that a proporation of the laser light separated by the light splitter 2 be an extent having no occurrence of the error in the light detector 4, and be as small as possible; it is desirable that the fraction be adjustable for each device. However, when the partially reflective coating is employed like the prior art shown in Fig. 12, the proportion of the laser light separated by the light splitter 102 is always constant, which poses a problem such that a later adjustment thereof is difficult. Further, when it is adjusted by a filter or the like, there is a problem such that the number of components is increased, which makes the device complicated and also the laser output measurement mechanism expensive. In contrast, according to the present invention, when the rotation angle of the light splitter 2 is changed with the use of the angle adjustment mechanism 21, it becomes possible to adjust easily the proportion of the laser light separated by the light splitter 2 for each device.

As described above, according to Embodiment 1, since it is configured such that without application of the partially reflective coating to the reflection surface of the light splitter 2, the polarization direction of the laser light incident on the reflection surface (the ratio of the P-wave and S-wave) is adjusted by rotating the light splitter 2 by a predetermined angle about the optical axis 6 of the laser light, thereby adjusting the Fresnel reflectivity that depends on the polarization direction and the incident angle of the laser light at the reflection surface, the problem of the instability in the laser output measurement due to the partially reflective coating like the prior art can be avoided, so that an accurate laser output measurement can be achieved at low cost.

Incidentally, in Embodiment 1, it is configured such that the ratio of the P-wave and S-wave is adjusted with the use of the angle adjusting mechanism 21 to thereby adjust the proportion of the reflected light. However, the angle adjusting mechanism 21 is not necessarily required, and it may be configured to be fixed at an angle such that an intended reflectivity can be obtained. With such a configuration, since the angle adjusting mechanism 21 is eliminated, the number of components thereof is reduced, so that cost reduction thereof becomes possible, and also since the movable parts can be reduced, a highly reliable laser output measurement mechanism can be configured.

Embodiment 2.

In Embodiment 1, there is shown the case where the angle adjustment mechanism 21 for rotating the light splitter 2 by a predetermined angle about the optical axis 6 of the laser light is employed. In contrast, in Embodiment 2, there is shown a case where an angle adjustment mechanism 22 for rotating the light splitter 2 by a predetermined angle about a line as an axis 7 perpendicular to the optical axis 6 of the laser light and existing on a reflection surface thereof is employed.

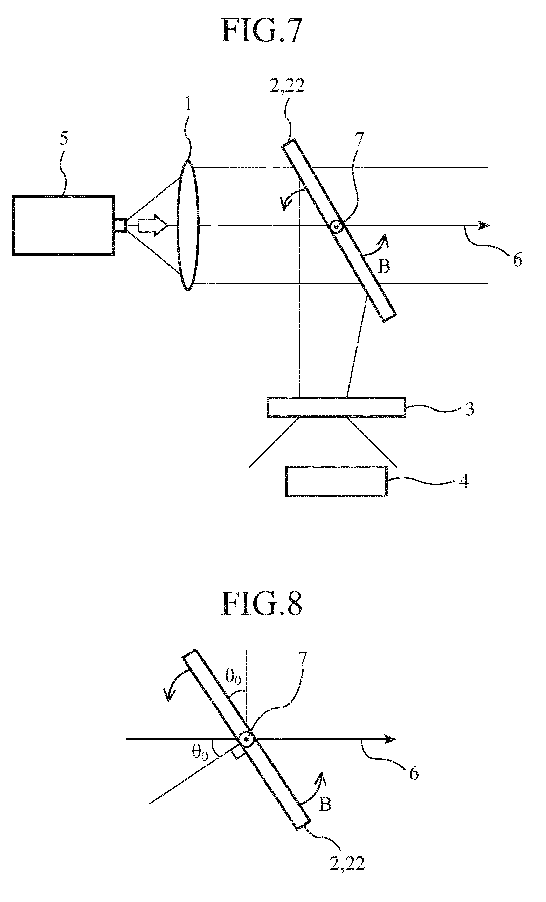

Fig. 7 is a side view showing a configuration of a laser output measurement mechanism according to Embodiment 2 of the present invention. The laser output measurement mechanism according to Embodiment 2 shown in Fig. 7 corresponds to the laser output measurement mechanism according to Embodiment 1 except that the angle adjusting mechanism 21 is replaced with the angle adjusting mechanism 22. The other components are similar to the above; the same reference numerals and signs are given therefor, and descriptions thereof will be omitted here.

As shown in Figs. 7 to 9, the light splitter 2 is equipped with the angle adjusting mechanism 22 for rotating the light splitter 2 in an arrow B direction by a predetermined angle (in the range from 0° to 90°) about the line as the axis 7 perpendicular to the optical axis 6 of the laser light and existing on the reflection surface. Then, when the angle of the light splitter 2 is adjusted by the angle adjusting mechanism 22, the incident angle of the laser light incident on the reflection surface of the light splitter 2 is adjusted, so that a Fresnel reflectivity that depends on the polarization direction and the incident angle of the laser light at the reflection surface is adjusted.

Meanwhile, it is required that the laser light incident on the light splitter 2 are made incident thereon at a constant ratio without a temporal change of a P-wave and a S-wave thereof, and hence it is desirable to use nearly linearly polarized laser light. However, any laser light other than completely non-polarized light is applicable to the present invention. Further, from the formulae (1) and (2) in Embodiment 1, it can be seen that the reflectivities $R_p$ and $R_s$ for the P-wave and S-wave are determined by the refractive index n of the material of the reflection surface in the light splitter 2 and the incident angle $\theta_0$ of the laser light on the light splitter 2.

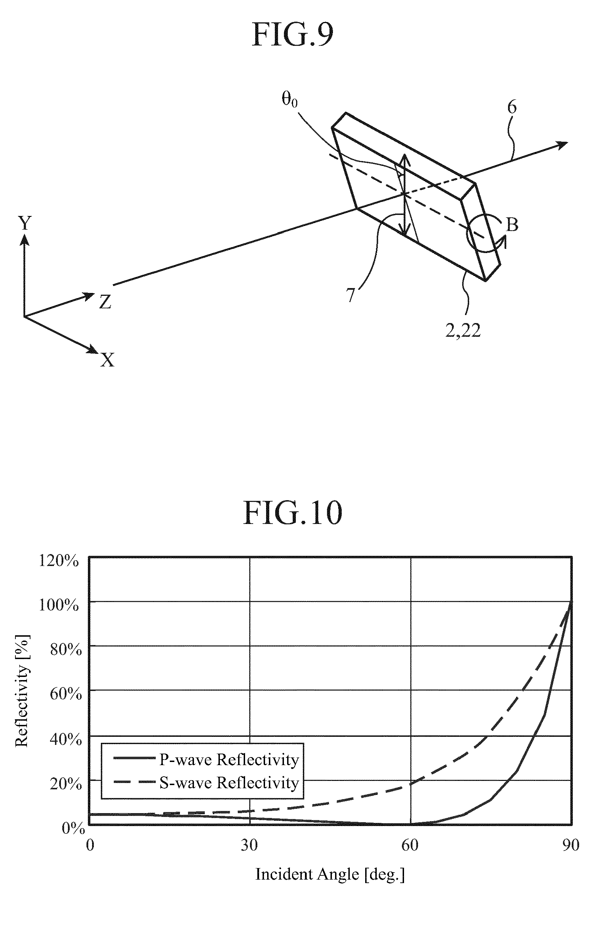

Fig. 10 is a diagram showing a dependence relationship between the incident angle $\theta_0$ of the laser light on the light splitter 2, and the respective reflectivities $R_p$, $R_s$ for the P-wave and S-wave, when a glass (BK) is employed as the reflection surface in the light splitter 2. For example, when the light splitter 2 is disposed such that the incident angle $\theta_0$ of the laser light becomes 55°, from the above formulae (1) to (3), the reflectivity in the P-wave incidence is $R_p \times 100$ = 0%, and the reflectivity in the S-wave incidence is $R_s \times 100$ = 14.6%. Further, when the incident angle $\theta_0$ of the laser light is set to 85°, from the above formulae (1) to (3), the reflectivity for the incident P-wave is $R_p \times 100$ = 49.2%, and the reflectivity for the incident S-wave is $R_s \times 100$ = 73.8%.

Thus, when the incident angle $\theta_0$ of the laser light on the light splitter 2 is adjusted, the reflectivities $R_p$, $R_s$ themselves for the P-wave and S-wave can be adjusted.

As described above, according to Embodiment 2, since it is configured such that the incident angle of the laser light on the reflection surface is adjusted by rotating the light splitter 2 by a predetermined angle about the line as the axis 7 perpendicular to the optical axis 6 of the laser light and existing on the reflection surface to thereby adjust the Fresnel reflectivity that depends on the polarization direction and the incident angle of the laser light at the reflection surface, the reflectivities $R_p$, $R_s$ themselves for the P-wave and S-wave can be adjusted, the problem of the instability in the laser output measurement due to the partially reflective coating like the prior art can be avoided, so that an accurate laser output measurement can be achieved at low cost.

However, also in Embodiment 2, similarly to Embodiment 1, the angle adjusting mechanism 22 is not necessarily required, and it may be configured to be fixed at an angle such that an intended reflectivity can be obtained.

Embodiment 3.

In Embodiment 1, there is shown the case where the angle adjustment mechanism 21 for rotating the light splitter 2 by a predetermined angle about the optical axis 6 of the laser light is employed, and in Embodiment 2, there is shown the case where the angle adjustment mechanism 22 for rotating the light splitter 2 by a predetermined angle about the line as the axis 7 perpendicular to the optical axis 6 of the laser light and existing on the reflection surface is employed. In contrast, in Embodiment 3, there is shown a case where two mechanisms of the angle adjusting mechanism 21 and the angle adjusting mechanism 22 are employed.

Fig. 11 is a side view showing a configuration of a laser output measurement mechanism according to Embodiment 3 of the present invention. The laser output measurement mechanism according to Embodiment 3 shown in Fig. 11 corresponds to the laser output measurement mechanism according to Embodiment 1 except that the angle adjusting mechanism 22 is added thereto. The other components are similar to the above; the same reference numerals and signs are given therefor, and descriptions thereof will be omitted here.

As shown in Fig. 11, the light splitter 2 is equipped with two mechanisms including: the angle adjusting mechanism 21 for rotating (in an arrow A direction) the light splitter 2 by a predetermined angle (in the range from 0° to 90°) about the optical axis 6 of the laser light; and the angle adjusting mechanism 22 for rotating in an arrow B direction the light splitter 2 by a predetermined angle (in the range from 0° to 90°) about the line as the axis 7 perpendicular to the optical axis 6 of the laser light and existing on the reflection surface. Then, when the angle of the light splitter 2 is adjusted by the angle adjusting mechanisms 21, 22, the polarization direction and the incident angle of the laser light incident on the reflection surface of the light splitter 2 is adjusted, so that a Fresnel reflectivity that depends on the polarization direction and the incident angle of the laser light at the reflection surface is adjusted.

Here, for example, in a case where a glass (BK) is employed as the reflection surface of the light splitter 2, when it is disposed such that the light splitter 2 is rotated about the axis 7 to attain 55° at the incident angle $\theta_0$ of the laser light, from the above formulae (1) to (3), the reflectivity of the light splitter 2 becomes adjustable in the range from 0% to 14.6% when the rotation angle about the optical axis 6 is adjusted. Further, for example, when the incident angle $\theta_0$ of the laser light is set to 85°, from the above formulae (1) to (3), the reflectivity becomes adjustable in the range from 49.2% to 73.8%. Thus, when the incident angle $\theta_0$ is adjusted, it becomes possible to adjust the reflectivity with a desired likelihood.

As described above, according to Embodiment 3, since it is configured to employ the two mechanisms including: the angle adjusting mechanism 21 for rotating the light splitter 2 by a predetermined angle about the optical axis 6 of the laser light; and the angle adjusting mechanism 22 for rotating the light splitter 2 by a predetermined angle about the line as the axis 7 perpendicular to the optical axis 6 of the laser light and existing on the reflection surface, the reflectivities $R_p$, $R_s$ themselves for the P-wave and S-wave can be adjusted, and also the reflectivity can be adjusted within the range from $R_p$ to $R_s$. Accordingly, in comparison to Embodiments 1 and 2, an adjusted likelihood in the reflectivity can be enhanced to thereby achieve an intended reflectivity.

However, also in Embodiment 3, similarly to Embodiments 1, 2, the angle adjusting mechanisms 21, 22 are not necessarily required, and it may be configured to be fixed at an angle such that an intended reflectivity can be obtained.

It is noted that the present invention can be implemented by a free combination of the embodiments, a modification of arbitrary components of the embodiments, or an omission of arbitrary components of the embodiments, within the scope of the invention.

INDUSTRIAL APPLICABILITY

The laser output measurement mechanism according to the invention can perform accurately the output measurement of the laser light at low cost without applying the partially reflective coating to the light splitter, and it is thus suitable for use in a laser output measurement mechanism used to perform output control of the laser light, and the like.

DESCRIPTION OF REFERENCE NUMERALS and SIGNS

1: lens, 2: light splitter, 3: diffusion plate, 4: light detector, 5: laser oscillator, 6: optical axis, 7: axis, 21, 22: angle adjusting mechanism.

**Claims**

1. A laser output measurement mechanism comprising:

a light splitter that is disposed in a state rotated by a predetermined angle about an optical axis of laser light incident thereon, and that reflects a part of the laser light according to a Fresnel reflectivity that depends on a polarization direction and an incident angle of the laser light at a reflection surface thereof; and
a light detector that measures an intensity of the laser light reflected by the light splitter.

**2.** The laser output measurement mechanism according to Claim 1, further comprising an angle adjusting mechanism that rotates the light splitter by a predetermined angle about the optical axis.

**3.** The laser output measurement mechanism according to Claim 2, wherein the light splitter and the light detector are integrally configured with each other.

**4.** The laser output measurement mechanism according to Claim 1, wherein the laser light is substantially linearly polarized light.

**5.** The laser output measurement mechanism according to Claim 1, further comprising a lens that is disposed in a front stage of the light splitter, and that collimates the laser light incident thereon into parallel light.

**6.** The laser output measurement mechanism according to Claim 1, further comprising a diffusion plate that is disposed in a rear stage of the light splitter, and that diffuses the light reflected by the light splitter to make it incident on the light detector.

**7.** The laser output measurement mechanism according to Claim 1, wherein the light splitter is disposed in a state rotated by a predetermined angle about a line as an axis perpendicular to the optical axis and existing on the reflection surface.

**8.** The laser output measurement mechanism according to Claim 7, further comprising an angle adjusting mechanism that rotates the light splitter by a predetermined angle about the line as the axis perpendicular to the optical axis and existing on the reflection surface.

**9.** A laser output measurement mechanism comprising:

a light splitter that is disposed in a state rotated by a predetermined angle about a line as an axis perpendicular to an optical axis of laser light incident thereon and existing on a reflection surface thereof, and that reflects a part of the laser light according to a Fresnel reflectivity that depends on a polarization direction and an incident angle of the laser light at the reflection surface; and
a light detector that measures an intensity of the laser light Fresnel-reflected by the light splitter.

**10.** The laser output measurement mechanism according to Claim 9, further comprising an angle adjusting mechanism that rotates the light splitter by a predetermined angle about the line as the axis perpendicular to the optical axis and existing on the reflection surface.

**11.** The laser output measurement mechanism according to Claim 10, wherein the light splitter and the light detector are integrally configured with each other.

**12.** The laser output measurement mechanism according to Claim 9, wherein the laser light is substantially linearly polarized light.

**13.** The laser output measurement mechanism according to Claim 9, further comprising a lens that is disposed in a front stage of the light splitter, and that collimates the laser light incident thereon into parallel light.

**14.** The laser output measurement mechanism according to Claim 9, further comprising a diffusion plate that is disposed in a rear stage of the light splitter, and that diffuses the light reflected by the light splitter to make it incident on the light detector.

## FIG.1

## FIG.2

# FIG.3

# FIG.4

(a)                                        (b)

# FIG.5

# FIG.6

# FIG.7

# FIG.8

# FIG.9

# FIG.10

# FIG.11

# FIG.12

## INTERNATIONAL SEARCH REPORT

| International application No. |
| --- |
| PCT/JP2011/005683 |

**A. CLASSIFICATION OF SUBJECT MATTER**
*G01J1/02*(2006.01)i

According to International Patent Classification (IPC) or to both national classification and IPC

**B. FIELDS SEARCHED**

Minimum documentation searched (classification system followed by classification symbols)
G01J1/00-1/04, G01J1/42, G01J3/00-3/36, G01M11/00, G02B5/00, G02B5/30,
H01S3/00, H01S3/10, H01S3/13-3/139, H01S5/02, H01S5/068-H01S5/0687,
H04B10/06-10/08

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2002-048911 A  (Kabushiki Kaisha Ushio Sogo<br>Gijutsu Kenkyusho),<br>15 February 2002 (15.02.2002),<br>paragraphs [0013] to [0024]; fig. 1 to 6<br>(Family: none) | 1,4,7,9,12<br>5,6,13-14<br>2,3,8,10,11 |
| X<br>Y<br>A | JP 04-111370 A  (Komatsu Ltd.),<br>13 April 1992 (13.04.1992),<br>page 2, upper right column, lines 5 to 9;<br>upper right column, line 20 to lower left<br>column, line 7; fig. 4(b) to 4(c)<br>(Family: none) | 1,4<br>5,6<br>2,3,7-14 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    11 January, 2012 (11.01.12) | Date of mailing of the international search report<br>    24 January, 2012 (24.01.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**EP 2 767 809 A1**

**INTERNATIONAL SEARCH REPORT**

| International application No. |
|---|
| PCT/JP2011/005683 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-249600 A  (Komatsu Ltd.),<br>14 September 2000 (14.09.2000),<br>paragraphs [0033] to [0040]; fig. 1<br>& US 6243163 B1 | 5,13 |
| Y | JP 06-268308 A  (Sony Corp.),<br>22 September 1994 (22.09.1994),<br>paragraph [0048]; fig. 1 to 2<br>(Family: none) | 6,14 |
| A | JP 04-220535 A  (Nippon Denki Laser Kiki<br>Engineering Kabushiki Kaisha),<br>11 August 1992 (11.08.1992),<br>paragraphs [0002] to [0005], [0012]; fig. 1, 3,<br>6, 8, 9<br>(Family: none) | 1-14 |

Form PCT/ISA/210 (continuation of second sheet) (July 2009)

**INTERNATIONAL SEARCH REPORT**

International application No.

PCT/JP2011/005683

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The document 1 (JP 2002-048911 A (Kabushiki Kaisha Ushio Sogo Gijutsu Kenkyusho), 15 February 2002 (15.02.2002), paragraphs [0013]-[0024], fig. 1-6) and the document 2 (JP 04-111370 A (Komatsu Ltd.), 13 April 1992 (13.04.1992), page 2, upper right column, lines 5-9, page 2, upper right column, line 20-lower left column, line 7, fig. 4(b)-4(c)) respectively disclose "laser output measurement mechanism which branches a part of laser beams emitted from a laser oscillator as monitoring light, and detects the strength of branched monitoring light by an optical detector, wherein an optical separator utilizing Fresnel reflection as an optical separator which reflects a part of laser beams and branches the same". (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/005683

Continuation of Box No.III of continuation of first sheet(2)

Consequently, the invention of claim 1 cannot be considered to be novel in the light of the inventions disclosed in the document 1 and the document 2 respectively, and does not have a special technical feature.
Therefore, it is considered that multiple invention groups are involved in claims.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04220535 B